(19)

Europäisches
Patentamt
European
Patent Office
Office européen
des brevets

(11) **EP 2 273 089 A1**

(12) **EUROPEAN PATENT APPLICATION**
published in accordance with Art. 153(4) EPC

(43) Date of publication:
**12.01.2011 Bulletin 2011/02**

(51) Int Cl.:
*F02D 19/02* (2006.01)  *F02D 41/02* (2006.01)
*F02D 41/04* (2006.01)  *F02D 41/14* (2006.01)

(21) Application number: **09734978.1**

(22) Date of filing: **05.03.2009**

(86) International application number:
**PCT/JP2009/054138**

(87) International publication number:
**WO 2009/130950 (29.10.2009 Gazette 2009/44)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **23.04.2008 JP 2008112579**

(71) Applicant: **Yanmar Co., Ltd.
Osaka-shi, Osaka 530-0013 (JP)**

(72) Inventor: **HAGIWARA, Ryouichi
Osaka-shi
Osaka 530-0013 (JP)**

(74) Representative: **Jostarndt, Hans-Dieter
Jostarndt Patentanwalts-AG
Brüsseler Ring 51
52074 Aachen (DE)**

(54) **GAS ENGINE**

(57)     Provided is a gas engine wherein NOx concentration in exhaust gas can be maintained properly regardless of fuel gas composition. A gas engine (101) comprises a fuel gas supply regulation valve (45) for regulating fuel gas supply, an engine speed sensor (71) for detecting engine speed, an engine torque sensor (72) for detecting engine load, and a controller (50) for calculating a proper fuel gas supply and regulating the fuel gas supply regulation means to ensure the proper fuel gas supply thus calculated, wherein the controller (50), calculates the temperature difference of a combustion chamber in the combustion stroke of one combustion cycle by recognizing at least the engine speed and engine load and calculates the NOx concentration in exhaust gas based on the temperature difference, calculates a proper fuel gas supply based on the NOx concentration and regulates the fuel gas supply regulation valve (45) to ensure the proper fuel gas supply.

Fig. 1

EP 2 273 089 A1

**Description**

Technical Field

The present invention relates to a gas engine which can maintain a proper NOx concentration in exhaust gas.

Background Art

Conventionally, there is a well-known gas engine having a combustion chamber supplied with mixture of air and fuel gas. There also is a well-known air-fuel ratio control for reducing the NOx concentration in exhaust gas by controlling the air-fuel ratio of the gas engine at its lean limit.

The engine disclosed in the Japanese Patent Laid Open Gazette 2008-038729 has a lean burn sensor and the air-fuel ratio control is performed based on oxygen concentration measured by the lean burn sensor so as to reduce NOx concentration in exhaust gas.

However, the engine disclosed in the Japanese Patent Laid Open Gazette 2008-038729 cannot recognize the change of the NOx concentration in the exhaust gas when the composition of the fuel gas is changed, whereby the engine is disadvantageous because the NOx concentration cannot be maintained properly.

Disclosure of Invention

Problems to Be Solved by the Invention

The present invention is provided in consideration of the above problems, and the purpose thereof is to provide a gas engine which can maintain a NOx concentration in exhaust gas regardless of fuel gas composition.

Means for Solving the Problems

A gas engine according to the present invention comprises a fuel gas supply amount regulation means for regulating a fuel gas supply amount, an engine speed detection means for detecting an engine speed, an engine load detection means for detecting an engine load, and a control means for calculating a proper fuel gas supply amount and regulating the fuel gas supply amount regulation means so as to ensure the proper fuel gas supply amount. The control means recognizes at least the engine speed and the engine load so as to calculate a temperature difference in a combustion chamber in a combustion stroke of one combustion cycle, calculates a NOx concentration in exhaust gas based on the temperature difference, calculates the proper fuel gas supply amount based on the NOx concentration, and regulates the fuel gas supply amount regulation means so as to ensure the proper fuel gas supply amount.

Preferably, the gas engine according to the present invention comprises an air-fuel mixture temperature detection means for detecting an air-fuel mixture temperature, an air-fuel mixture pressure detection means for detecting an air-fuel mixture pressure, and a throttle opening detection means for detecting a throttle opening. The control means recognizes at least the engine speed, the engine load, the air-fuel mixture temperature, the air-fuel mixture pressure and the throttle opening so as to calculate a temperature difference in the combustion chamber in the combustion stroke of one combustion cycle.

Preferably, the gas engine according to the present invention comprises a fuel gas temperature detection means for detecting a fuel gas temperature, a fuel gas pressure detection means for detecting a fuel gas pressure, an air mass flow rate detection means for detecting an air mass flow rate, and a fuel gas supply amount detection means for detecting the fuel gas supply amount of the fuel gas supply amount regulation means. The control means recognizes at least the engine speed, the engine load, the fuel gas temperature, the fuel gas pressure, the air mass flow rate and the fuel gas supply amount so as to calculate a temperature difference in the combustion chamber in the combustion stroke of one combustion cycle.

Preferably, the gas engine according to the present invention comprises an air-fuel mixture flow rate detection means for detecting an air-fuel mixture flow rate. The control means recognizes at least the engine speed, the engine load and the mixture flow rate so as to calculate a temperature difference in the combustion chamber in the combustion stroke of one combustion cycle.

Preferably, the gas engine according to the present invention comprises an air-fuel mixture temperature detection means for detecting an air-fuel mixture temperature, an air-fuel mixture pressure detection means for detecting an air-fuel mixture pressure, a throttle opening detection means for detecting a throttle opening, a cylinder pressure detection means for detecting a cylinder pressure in a cylinder, and an exhaust gas temperature detection means for detecting an exhaust gas temperature. Instead of calculating the NOx concentration of the exhaust gas based on the temperature difference, the control means recognizes at least the engine speed, the engine load, the air-fuel mixture temperature, the air-fuel mixture pressure, the throttle opening, the cylinder pressure in the cylinder and the exhaust gas temperature so as to calculate a maximum temperature in the combustion chamber in the combustion stroke of one combustion cycle, and calculates the NOx concentration of the exhaust gas based on the maximum temperature.

Effect of the Invention

According to the gas engine of the present invention, NOx concentration in exhaust gas can be maintained properly regardless of fuel gas composition.

Brief Description of Drawings

[Fig. 1] It is a schematic drawing of a gas engine according to an embodiment 1.
[Fig. 2] It is a flow chart of air-fuel ratio control of the embodiment 1.
[Fig. 3] It is a schematic drawing of a gas engine according to an embodiment 2.
[Fig. 4] It is a flow chart of air-fuel ratio control of the embodiment 2.
[Fig. 5] It is a schematic drawing of a gas engine according to an embodiment 3.
[Fig. 6] It is a flow chart of air-fuel ratio control of the embodiment 3.
[Fig. 7] It is a schematic drawing of a gas engine according to an embodiment 4.
[Fig. 8] It is a flow chart of air-fuel ratio control of the embodiment 4.

The Best Mode for Carrying out the Invention

As the gas engine of the present invention, four embodiments will be explained below. Embodiments 1 to 3 are gas engines 101 to 103 each of which has calculation of NOx concentration based on temperature difference in a combustion chamber in a combustion stroke of one combustion cycle, and they have different methods for calculating the NOx concentration. An embodiment 4 is a gas engine 104 that has NOx concentration calculated based on the maximum temperature in the combustion chamber in the combustion stroke of one combustion cycle.

[Embodiment 1]

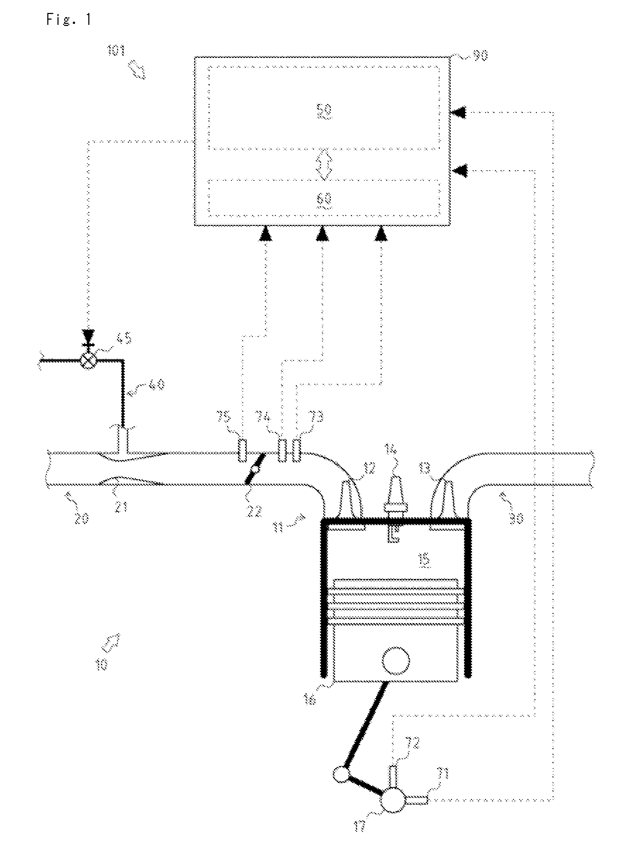

As shown in Fig. 1, the gas engine 101 includes an engine body 10 and an electronic control unit (hereinafter, referred to as ECU) 90 as a control means.

The engine body 10 includes an intake passage, an exhaust passage and a fuel gas supply passage. The engine body 10 is a 3-cylindered gas engine body using aeriform fuel gas, such as natural gas, and has three cylinders including a cylinder shown in the drawing. In this embodiment, the engine body 10 is mounted in an engine driven heat pump.

The intake passage includes an intake pipe 20 for supplying air-fuel mixture generated by mixing air brought from the outside of the engine with the fuel gas, a venturi 21 for generating pressure difference between the fuel gas and the air in the fuel gas supply passage, and a throttle valve 22 for regulating the supply amount of the mixture.
The exhaust passage includes an exhaust pipe 30 for discharging exhaust gas generated by the combustion of the air-fuel mixture in a later-discussed combustion chamber 15 to the outside of the engine body 10.
The fuel gas supply passage includes a fuel gas supply pipe 40 for supplying the fuel gas to the intake passage, and a fuel gas supply regulation valve 45 serving as a fuel gas supply regulation means for regulating fuel gas amount passing through the fuel gas supply pipe 40, that is, fuel gas amount included in the air-fuel mixture.

The engine body includes: the combustion chamber 15 which is a space for burning the air-fuel mixture therein; an intake valve 12 in a cylinder head 11, wherein the intake valve 12 is opened for communicating the intake pipe 20 with the combustion chamber 15 and is closed for isolating the intake pipe 20 from the combustion chamber 15; a spark plug 14 for generating sparks so as to burn the air-fuel mixture supplied to the combustion chamber 15; a piston 16 moved vertically reciprocally by the combustion and expansion of the air-fuel mixture supplied to the combustion chamber 15; a crankshaft 17 rotated by the reciprocal movement of the piston 16; and an exhaust valve 13 in the cylinder head 11, wherein the exhaust valve 13 is opened for communicating the exhaust pipe 30 with the combustion chamber 15 and is closed for isolating the exhaust pipe 30 from the combustion chamber 15.

The ECU 90 is connected to an engine speed sensor 71, an engine torque sensor 72, an air-fuel mixture temperature sensor 73, an air-fuel mixture pressure sensor 74, a throttle opening sensor 75, and the fuel gas supply regulation valve 45. These sensors will be detailed.

The engine speed sensor 71, serving as an engine speed detection means, is provided in the vicinity of the crankshaft 17 so as to be able to measure an engine speed Ne.

The engine torque sensor 72, serving as an engine load detection means, is provided in the vicinity of the crankshaft 17 so as to be able to measure an engine torque Tq as the engine load.

The air-fuel mixture temperature sensor 73, serving as an air-fuel mixture temperature detection means, is provided in the feed pipe 20 so as to be able to measure an air-fuel mixture temperature Tin.

The air-fuel mixture pressure sensor 74, serving as an air-fuel mixture pressure detection means, is provided in the feed pipe 20 so as to be able to measure an air-fuel mixture pressure Pin.

The throttle opening sensor 75, serving as a throttle opening detection means, can measure a throttle opening F regulated by the engine speed Ne. The throttle opening detection means may alternatively be a throttle position sensor.

The ECU 90 includes a controller 50 and a storage device 60.

The controller 50 calculates a NOx concentration S in the exhaust gas based on a temperature difference $\Delta T$ in the combustion chamber 15 in the combustion stroke of one combustion cycle. The controller 50 regulates the opening of the fuel gas supply regulation valve 45 so as to perform air-fuel ratio control.

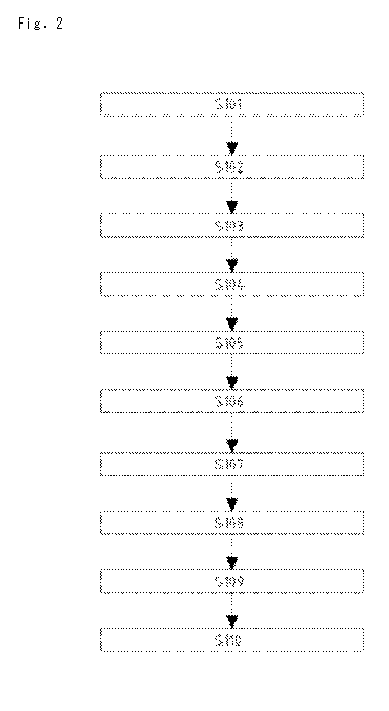

As shown in Fig. 2, at S101, the controller 50 reads the engine speed Ne from the engine speed sensor 71, the engine torque Tq from the engine torque sensor 72, the air-fuel mixture temperature Tin from the air-fuel mixture temperature sensor 73, the air-fuel mixture pressure Pin from the air-fuel mixture pressure sensor 74, and the throttle opening F from the throttle opening sensor 75.

At S102, the controller 50 calculates a volumetric efficiency $\eta v$ from the throttle opening F with a volumetric efficiency map. It is known that a correlation exists between the throttle opening F and the volumetric efficiency $\eta v$ regardless of fuel gas composition. Therefore, the volumetric efficiency map is a two-dimensional map showing the correlation between the throttle opening F and the volumetric efficiency $\eta v$, and is previously stored in the storage device 60.

At S103, the controller 50 calculates an air-fuel mixture flow rate Gmixv from the mixture temperature Tin, the mixture pressure Pin, the volumetric efficiency $\eta v$, a stroke volume Vs and the engine speed Ne with a formula (1-1).

[Formula 1]

$$Gmixv = \frac{273.15}{Tin} \times \frac{Pin}{101.325} \times \eta v \times Vs \times Ne \quad \cdots \cdots \quad (1\text{-}1)$$

Gmixv [Nm$^3$/min]
Tin [K]
Pin [kpa]
$\eta v$
Vs [m$^3$]
Ne [min$^{-1}$]

The stroke volume Vs is the volume of the stroke of the piston 16 in the engine body 10 from a top dead point to a bottom dead point.

At S104, the controller 50 calculates an engine output P from the engine speed Ne and the engine torque Tq with a formula (1-2).

[Formula 2]

$$P = \frac{2 \times \pi \times Ne \times Tq}{60 \times 1000} \quad \cdots \cdots \quad (1\text{-}2)$$

P [kW]
Ne [min$^{-1}$]
Tq [N·m]
Tq [N·m]

Further, a sensor for measuring the discharge pressure of the engine driven heat pump (high pressure HP) may be provided, so that the controller 50 can calculate the engine load, in its turn the engine output power P, based on the high pressure HP, and based on compression efficiency of coolant and mechanical efficiency in addition to the high pressure HP.

At S105, the controller 50 calculates the temperature difference $\Delta T$ from the engine output P, an air-fuel mixture density pmix and the air-fuel mixture flow rate Gmixv with a formula (1-5). The formula (1-5) is calculated from formulas (1-3) and (1-4).

The temperature difference $\Delta T$ is the temperature difference in the combustion chamber 15 in the combustion stroke of one combustion cycle. It is known that a correlation exists between the temperature difference $\Delta T$ and the later-discussed NOx concentration S. The notation H indicates a cylinder input heat quantity per unit time, and the notation Qmixm indicates a cylinder input air-fuel mixture heat quantity per unit time.

[Formula 3]

$$H = Qmixm \times Cv \times \Delta T \quad \cdots \cdots \quad (1\text{-}3)$$
$$H = \frac{P}{\eta th} \quad \cdots \cdots \quad (1\text{-}4)$$
$$\Delta T = \frac{P}{Gmixv \times \rho mix \times Cv \times \eta th} \quad \cdots \cdots \quad (1\text{-}5)$$

H [kW]
Qmixm [kg/sec]
Cv [kJ/kg·K]
$\Delta T$ [K]
P [kW]
$\eta$th
$\rho$mix [kg/Nm$^3$]
Gmixv [Nm$^3$/min]

A thermal efficiency $\eta$th is fixed regardless of the fuel gas composition. In this embedment, a specific heat at constant volume Cv and the mixture density pmix are fixed. The specific heat at constant volume Cv and the mixture density pmix have correlation with a mixture temperature Tmix regardless of the fuel gas composition, therefore, it may alternatively be constructed that this correlation is stored in the storage device 60 previously for calculating the specific heat at constant volume Cv and the mixture density pmix from the mixture temperature Tmix.

At S106, the controller 50 calculates later-discussed operation coefficients a, b and c from the engine speed Ne and the engine torque Tq with an operation coefficient map.

At S107, the controller 50 calculates the NOx concentration S from the temperature difference $\Delta T$ and the operation coefficients a, b and c with a formula (1-6).

[Formula 4]

$$S = a \times \Delta T^3 + b \times \Delta T^2 - c \times \Delta T + d \quad \cdots \cdots \quad (1\text{-}6)$$

At S108, the controller 50 calculates a target NOx concentration Sm from the engine speed Ne and the engine torque Tq with a target NOx concentration map. The target NOx concentration map is a three-dimensional map showing the correlation among the engine speed Ne, the engine torque Tq and the target NOx concentration Sm, and is stored in the storage device 60 previously.

At S109, the controller 50 calculates a NOx concentration deviation $\Delta S$ which is the deviation between the target NOx concentration Sm and the NOx concentration S.

At S 110, the controller 50 regulates the opening of the fuel gas supply regulation valve 45 based on the NOx concentration deviation $\Delta S$.

According to the construction, the NOx concentration in the exhaust gas can be maintained properly regardless of the fuel gas composition. In comparison with the case of employing a NOx sensor, the NOx concentration can be calculated more cheaply and durably. Furthermore, the construction is adoptable in the case that the NOx concentration in the exhaust gas does not correspond to the engine efficiency.

[Embodiment 2]

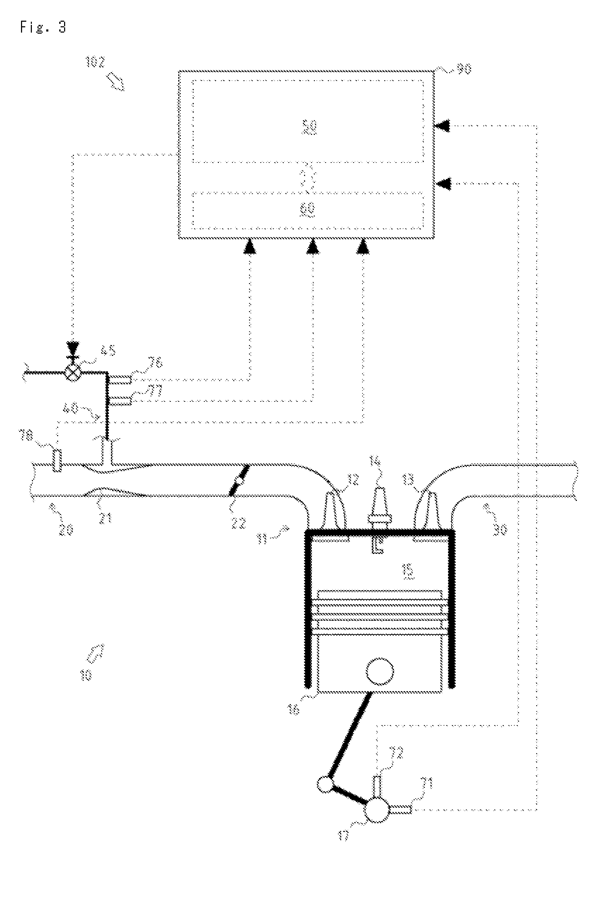

As shown in Fig. 3, the engine body 10 of the gas engine 102 is similar to the engine body 10 of the embodiment 1 and the explanation thereof is omitted.

The engine speed sensor 71, serving as an engine speed detection means, is provided in the vicinity of the crankshaft 17 so as to be able to measure an engine speed Ne.

The engine torque sensor 72, serving as an engine load detection means, is provided in the vicinity of the crankshaft 17 so as to be able to measure an engine torque Tq as the engine load.

A fuel gas temperature sensor 76, serving as a fuel gas temperature detection means, is provided in the fuel gas supply pipe 40 so as to be able to measure a fuel gas temperature Tg.

A fuel gas pressure sensor 77, serving as a fuel gas pressure detection means, is provided in the fuel gas supply pipe 40 so as to be able to measure a fuel gas pressure Pg.

An air mass flow rate sensor 78, serving as an air mass flow rate detection means, is provided in the intake pipe 20 at the upstream side joining with the fuel gas supply pipe 40 so as to be able to measure an air mass flow rate Gin.

The ECU 90 includes a controller 50 and a storage device 60.

The controller 50 calculates a NOx concentration S in the exhaust gas based on a temperature difference $\Delta T$ in the combustion chamber 15 in the combustion stroke of one combustion cycle. The controller 50 regulates the opening of the fuel gas supply regulation valve 45 so as to perform air-fuel ratio control.

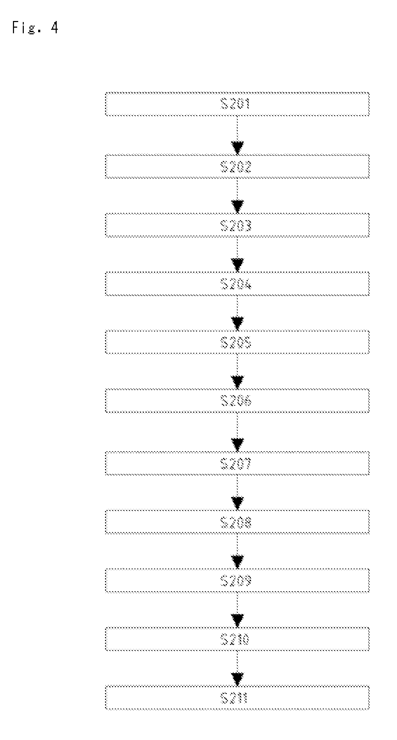

As shown in Fig. 4, at S201, the controller 50 reads the engine speed Ne from the engine speed sensor 71, the engine torque Tq from the engine torque sensor 72, the fuel gas temperature Tg from the fuel gas temperature sensor 76, the fuel gas pressure Pg from the fuel gas pressure sensor 77, and the air mass flow rate Gin from the air mass flow rate sensor 78.

The controller 50 reads an opening Fg of the fuel gas supply regulation valve 45.

At S202, the controller 50 calculates a fuel gas flow rate Gg from the air mass flow rate Gin and the opening Fg based on a fuel gas flow rate map. The fuel gas flow rate map is a three-dimensional map showing the correlation among the air mass flow rate Gin, the opening Fg and the fuel gas flow rate Gg, and is stored in the storage device 60 previously.

At S203, the controller 50 converts the fuel gas flow rate Gg into a fuel gas flow rate (standard) Ggstd which is the fuel gas flow rate at the standard state from the fuel gas temperature Tg and the fuel gas pressure Pg with a formula (2-1).

[Formula 5]

$$Ggstd = \frac{273.15}{Tg} \times \frac{Pg}{101.325} \times Gg \quad \cdots \cdots \quad (2\text{-}1)$$

Ggstd [Nm$^3$/min]
Gg [Nm$^3$/min]
Tg [K]
Pg [kpa]

At S204, the controller 50 calculates the air-fuel mixture flow rate Gmixv from the air mass flow rate Gin, an air density $\rho$in and the fuel gas flow rate (standard) Ggstd with a formula (2-2).

[Formula 6]

$$Gmixv = \frac{Gin}{\rho\,in} + Ggstd \quad \cdots \cdots \quad (2\text{-}2)$$

Gmixv [Nm$^3$/min]
Gin [kg/min]
$\rho$ in [kg/Nm$^3$]
Ggstd [Nm$^3$/min]

While the air-fuel mixture flow rate Gmixv is calculated from the air-fuel mixture temperature Tin and the air-fuel mixture pressure Pin in the embodiment 1, the air-fuel mixture flow rate Gmixv is calculated from the fuel gas temperature Tg, the fuel gas pressure Pg and the air mass flow rate Gin in this embodiment.

S205 to S210 are similar to S104 to S109 of the embodiment 1 and the explanation thereof is omitted.

At S211, the controller 50 regulates the opening of the fuel gas supply regulation valve 45 based on the NOx concentration deviation ΔS.

According to the construction, the NOx concentration in the exhaust gas can be maintained properly regardless of the fuel gas composition. In comparison with the case of employing a NOx sensor, a NOx concentration calculation means 52, which is more cheap and durable, can be realized. Furthermore, the construction is adoptable in the case that the NOx concentration in the exhaust gas does not correspond to the engine efficiency. In comparison with the NOx concentration calculation method of the embodiment 1, the NOx concentration can be calculated more accurately.

[Embodiment 3]

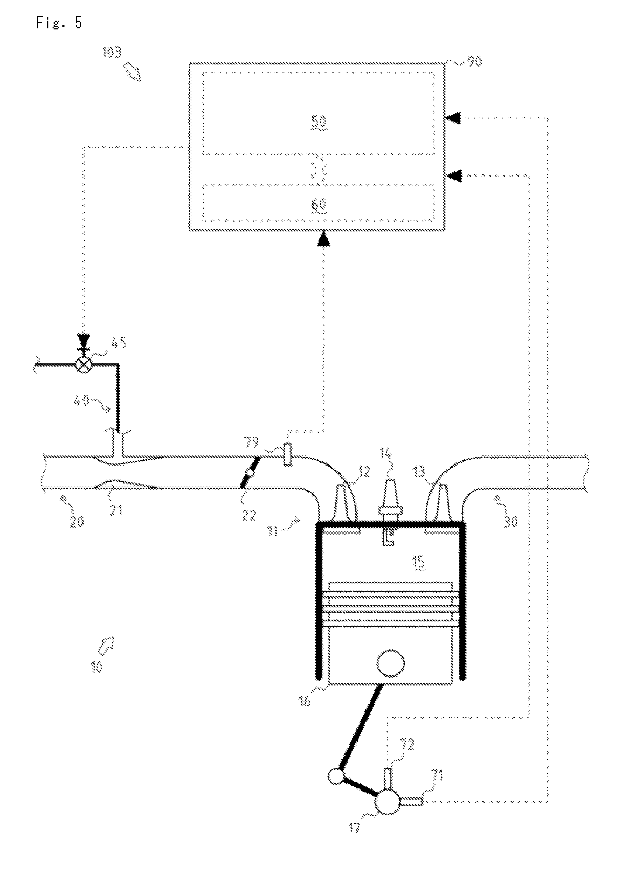

As shown in Fig. 5, the engine body 10 of the gas engine 103 is similar to the engine body 10 of the embodiment 1 and the explanation thereof is omitted.

The engine speed sensor 71, serving as an engine speed detection means, is provided in the vicinity of the crankshaft 17 so as to be able to measure an engine speed Ne.
The engine torque sensor 72, serving as an engine load detection means, is provided in the vicinity of the crankshaft 17 so as to be able to measure an engine torque Tq as the engine load.
A mixture flow amount sensor 79, serving as an air-fuel mixture flow amount detection means, is provided in the feed pipe 20 at the downstream of the throttle valve 22 so as to be able to measure the air-fuel mixture flow rate Gmixv.

The ECU 90 includes a controller 50 and a storage device 60.
The controller 50 calculates a NOx concentration S in the exhaust gas based on a temperature difference ΔT in the combustion chamber 15 in the combustion stroke of one combustion cycle. The controller 50 regulates the opening of the fuel gas supply regulation valve 45 so as to perform air-fuel ratio control.

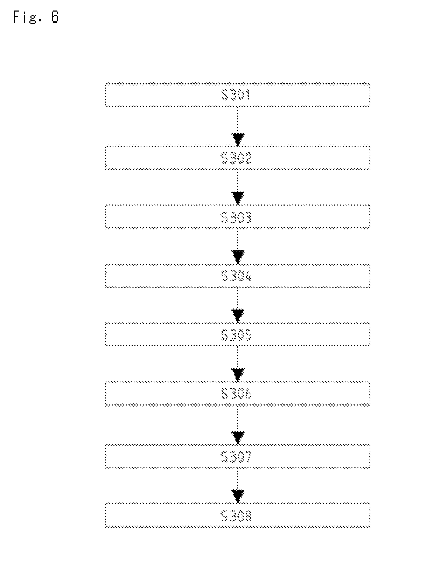

As shown in Fig. 6, at S301, the controller 50 reads the engine speed Ne from the engine speed sensor 71, the engine torque Tq from the engine torque sensor 72, and the mixture flow rate Gmixv from the mixture flow amount sensor 79.

S302 to S307 are similar to S205 to S210 of the embodiment 2 and the explanation thereof is omitted. While the mixture flow rate Gmixv is calculated from the fuel gas temperature Tg, the fuel gas pressure Pg and the like in the embodiment 2, the mixture flow rate Gmixv is detected directly by the air-fuel mixture flow amount sensor 79 in this embodiment.

At S308, the controller 50 regulates the opening of the fuel gas supply regulation valve 45 based on the NOx concentration deviation ΔS.

According to the construction, the NOx concentration in the exhaust gas can be maintained properly regardless of the fuel gas composition. In comparison with the case of employing a NOx sensor, a NOx concentration calculation means, which is more cheap and durable, can be realized. Furthermore, the construction is adoptable in the case that the NOx concentration in the exhaust gas does not correspond to the engine efficiency. In comparison with the NOx concentration calculation methods of the embodiments 1 and 2, the NOx concentration can be calculated more accurately.

[Embodiment 4]

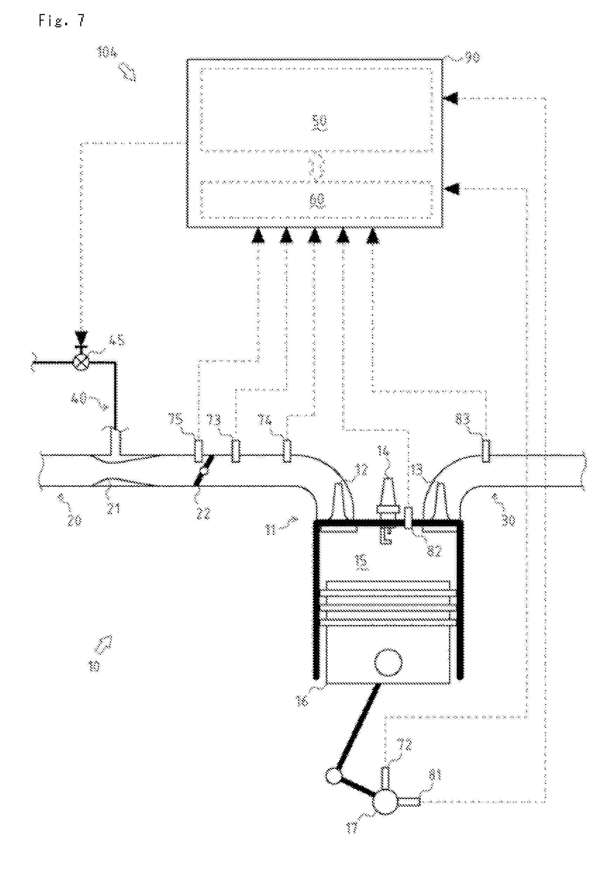

As shown in Fig. 7, the engine body 10 of the gas engine 104 is similar to the engine body 10 of the embodiment 1 and the explanation thereof is omitted.

An engine speed sensor 81, serving as an engine speed detection means, is provided in the vicinity of the crankshaft 17 so as to be able to measure an engine speed Ne. The engine speed sensor 81 can measure a pulse signal at every predetermined angle of a gear rotated synchronously to the crankshaft 17 so as to detect a crank angle θ corresponding to the engine speed Ne.
The engine torque sensor 72, serving as an engine load detection means, is provided in the vicinity of the crankshaft 17 so as to be able to measure an engine torque Tq as the engine load.
The mixture temperature sensor 73, serving as an air-fuel mixture temperature detection means, is provided in the feed pipe 20 so as to be able to measure an air-fuel mixture temperature Tin.

The mixture pressure sensor 74, serving as an air-fuel mixture pressure detection means, is provided in the feed pipe 20 so as to be able to measure an air-fuel mixture pressure Pin.

The throttle opening sensor 75, serving as a throttle opening detection means can measure a throttle opening F regulated by the engine speed Ne. The throttle opening detection means may alternatively be a throttle position sensor.

A cylinder pressure sensor 82, serving as a cylinder pressure detection means, can measure an average cylinder pressure $Pcyl(\theta)$ of the combustion chamber 15 every crank angle $\theta$ as the cylinder pressure in the cylinder.

An exhaust gas temperature sensor 83, seving as an exhaust gas temperature detection means detection means, is provided in the exhaust pipe 30 so as to be able to measure a residual gas temperature TR as the exhaust gas temperature.

The ECU 90 includes a controller 50 and a storage device 60.

The controller 50 calculates a NOx concentration S in the exhaust gas based on a maximum cylinder gas temperature Tcylmax in the combustion chamber 15 in the combustion stroke of one combustion cycle. The controller 50 regulates the opening of the fuel gas supply regulation valve 45 so as to perform air-fuel ratio control.

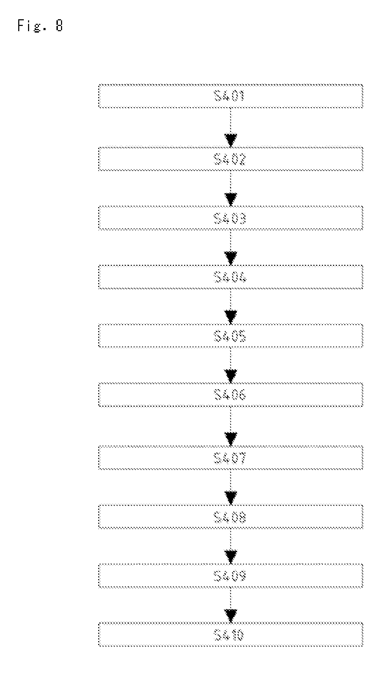

As shown in Fig. 8, at S401, the controller 50 reads the engine speed Ne and the crank angle $\theta$ from the engine speed sensor 81, the engine torque Tq from the engine torque sensor 72, the mixture temperature Tin from the mixture temperature sensor 73, the mixture pressure Pin from the mixture pressure sensor 74, the throttle opening F from the throttle opening sensor 75, and the average cylinder pressure $Pcyl(\theta)$ from the cylinder pressure sensor 82.

S402 to S404 are similar to S102 to S104 of the embodiment 1 and the explanation thereof is omitted.

At S405, the controller 50 calculates the maximum cylinder gas temperature Tcylmax from an average cylinder temperature $Tcyl(\theta)$. The average cylinder temperature $Tcyl(\theta)$ is calculated from the average cylinder pressure $Pcyl(\theta)$ and a cylinder volume $Vcyl(\theta)$ at the crank angle $\theta$ and a whole number of moles $m_{all}$ of the working gas in the cylinder with a formula (4-1).

[Formula 7]

$$Tcyl(\theta) = \frac{Pcyl(\theta) \times Vcyl(\theta)}{8314.3 \times m_{all}} \qquad \cdots \cdots (4-1)$$

$Tcyl(\theta)$ [K]
$Pcyl(\theta)$ [Pa]
$Vcyl(\theta)$ [m$^3$]
$m_{all}$ [kmol]

In this case, the whole number of moles $m_{all}$ of the working gas in the cylinder is calculated from the number of moles $m_{air}$ of intake air and the number of moles $m_R$ of residual gas, which are components of the air-fuel mixture, with a formula (4-2). The number of moles $m_{air}$ of intake air is calculated from the mixture flow rate Gmixv with a formula (4-3). On the other hand, the number of moles $m_R$ of residual gas is calculated from the gas components of water vapor, oxygen, carbon dioxide and nitrogen.

[Formula 8]

$$m_{all} = m_{air} + m_R \qquad \cdots \cdots (4-2)$$

$$m_{air} = \frac{Qmixv \times 2}{n \times 22.4} \qquad \cdots \cdots (4-3)$$

$$m_R = m_{H_2O} + m_{O_2} + m_{CO_2} + m_{N_2} \qquad \cdots \cdots (4-4)$$

$m_{air}$ [kmol]
$m_{air}$ [kmol]
$m_R$ [kmol]
$m_{H2O}$ p [kmol]

$m_{O2}$ [kmol]
$m_{CO2}$ [kmol]
$m_{N2}$ [kmol]

Furthermore, when the molar ratio of water vapor, oxygen, carbon dioxide and nitrogen in the residual gas is supposed to be 3:1:3:3, each of the gas components is calculated from a combustion chamber volume Vc, a cylinder pressure at the overlap top Pot and the residual gas temperature $T_R$ with formulas (4-5-1) to (4-5-4).

[Formula 9]

$$m_{H_2O} : \frac{0.3 \times Pot \times Vc}{8314.3 \times T_R} \quad \cdots \quad (4-5-1)$$

$$m_{O_2} : \frac{0.1 \times Pot \times Vc}{8314.3 \times T_R} \quad \cdots \quad (4-5-2)$$

$$m_{CO_2} : \frac{0.3 \times Pot \times Vc}{8314.3 \times T_R} \quad \cdots \quad (4-5-3)$$

$$m_{N_2} : \frac{0.3 \times Pot \times Vc}{8314.3 \times T_R} \quad \cdots \quad (4-5-4)$$

Pot [Pa]
Vc [$m^3$]
$T_R$ [K]

In this case, the combustion chamber volume Vc is calculated from a cylinder diameter D, a crank radius R and a compression ratio ε with a formula (4-6).

[Formula 10]

$$Vc = \frac{\pi \times D^4}{4} \times \frac{2}{\varepsilon - 1} \quad \cdots \quad (4-6)$$

D [m]
R [m]
ε

On the other hand, the cylinder volume Vcyl(θ) at the crank angle θ is calculated from the cylinder diameter D, the crank radius R and the compression ratio ε with a formula (4-7).

[Formula 11]

$$Vcyl(\theta) = \frac{\pi \times D^4}{4} \times R \times \left\{ \frac{2}{\varepsilon - 1} + 1 - \cos\theta r + \frac{R}{4 \times L} (1 - \cos 2\theta r) \right\} \quad \cdots \quad (4-7)$$

θr [rad]
D [m]
R [m]

$$\varepsilon$$
$$L \text{ [m]}$$

S406 is similar to S 106 of the embodiment 1 and the explanation thereof is omitted.

At S407, the controller 50 calculates the target NOx concentration Sm from the maximum cylinder gas temperature Tcylmax instead of the temperature difference $\Delta T$ at S107 and the operation coefficients a, b and c.

S408 and S409 are similar to S 108 and S109 of the embodiment 1 and the explanation thereof is omitted.

At S410, the controller 50 regulates the opening of the fuel gas supply regulation valve 45 based on the NOx concentration deviation $\Delta S$.

According to the construction, the NOx concentration in the exhaust gas can be maintained properly regardless of the fuel gas composition. In comparison with the case of employing a NOx sensor, a NOx concentration calculation means 52, which is more cheap and durable, can be realized. Furthermore, the construction is adoptable in the case that the NOx concentration in the exhaust gas does not correspond to the engine efficiency. In comparison with the NOx concentration calculation method of the embodiments 1, 2 and 3, the NOx concentration can be calculated more accurately.

In each of the above-mentioned embodiments, the control flow of an air-fuel ratio control means 55 is expressed as that for each of the cylinders. The air-fuel ratio control is performed by averaging the temperature differences $\Delta T$ of the respective cylinders or the maximum cylinder gas temperatures Tcylmax of the respective cylinders.

Industrial Applicability

The present invention is adaptable to a gas engine.

**Claims**

1. A gas engine comprising:

   a fuel gas supply amount regulation means for regulating a fuel gas supply amount;
   an engine speed detection means for detecting an engine speed;
   an engine load detection means for detecting an engine load; and
   a control means for calculating a proper fuel gas supply amount and regulating the fuel gas supply amount regulation means so as to ensure the proper fuel gas supply amount,
   **characterized in that** the control means recognizes at least the engine speed and the engine load so as to calculate a temperature difference in a combustion chamber in a combustion stroke of one combustion cycle, calculates a NOx concentration in exhaust gas based on the temperature difference, calculates the proper fuel gas supply amount based on the NOx concentration, and regulates the fuel gas supply amount regulation means so as to ensure the proper fuel gas supply amount.

2. The gas engine according to claim 1, further comprising:

   an air-fuel mixture temperature detection means for detecting an air-fuel mixture temperature;
   an air-fuel mixture pressure detection means for detecting an air-fuel mixture pressure; and
   a throttle opening detection means for detecting a throttle opening,
   wherein the control means recognizes at least the engine speed, the engine load, the air-fuel mixture temperature, the air-fuel mixture pressure and the throttle opening so as to calculate a temperature difference in the combustion chamber in the combustion stroke of one combustion cycle.

3. The gas engine according to claim 1, further comprising:

   a fuel gas temperature detection means for detecting a fuel gas temperature;
   a fuel gas pressure detection means for detecting a fuel gas pressure;
   an air mass flow rate detection means for detecting an air mass flow rate; and
   a fuel gas supply amount detection means for detecting the fuel gas supply amount of the fuel gas supply amount regulation means,
   wherein the control means recognizes at least the engine speed, the engine load, the fuel gas temperature, the fuel gas pressure, the air mass flow rate and the fuel gas supply amount so as to calculate a temperature difference in the combustion chamber in the combustion stroke of one combustion cycle.

**4.** The gas engine according to claim 1, further comprising:

an air-fuel mixture flow rate detection means for detecting an air-fuel mixture flow rate, wherein the control means recognizes at least the engine speed, the engine load and the air-fuel mixture flow rate so as to calculate a temperature difference in the combustion chamber in the combustion stroke of one combustion cycle.

**5.** The gas engine according to claim 1, further comprising:

an air-fuel mixture temperature detection means for detecting an air-fuel mixture temperature;
an air-fuel mixture pressure detection means for detecting an air-fuel mixture pressure;
a throttle opening detection means for detecting a throttle opening;
a cylinder pressure detection means for detecting a cylinder pressure in the cylinder; and
an exhaust gas temperature detection means for detecting an exhaust gas temperature, wherein, instead of calculating the NOx concentration of the exhaust gas based on the temperature difference, the control means recognizes at least the engine speed, the engine load, the air-fuel mixture temperature, the air-fuel mixture pressure, the throttle opening, the cylinder pressure in the cylinder and the exhaust gas temperature so as to calculate a maximum temperature in the combustion chamber in the combustion stroke of one combustion cycle, and calculates the NOx concentration of the exhaust gas based on the maximum temperature.

Fig. 1

Fig. 2

```
┌──────────────────────┐
│        S101          │
└──────────────────────┘
            │
            ▼
┌──────────────────────┐
│        S102          │
└──────────────────────┘
            │
            ▼
┌──────────────────────┐
│        S103          │
└──────────────────────┘
            │
            ▼
┌──────────────────────┐
│        S104          │
└──────────────────────┘
            │
            ▼
┌──────────────────────┐
│        S105          │
└──────────────────────┘
            │
            ▼
┌──────────────────────┐
│        S106          │
└──────────────────────┘
            │
            ▼
┌──────────────────────┐
│        S107          │
└──────────────────────┘
            │
            ▼
┌──────────────────────┐
│        S108          │
└──────────────────────┘
            │
            ▼
┌──────────────────────┐
│        S109          │
└──────────────────────┘
            │
            ▼
┌──────────────────────┐
│        S110          │
└──────────────────────┘
```

Fig. 3

Fig. 4

```
┌──────────────────────┐
│        S201          │
└──────────────────────┘
            │
            ▼
┌──────────────────────┐
│        S202          │
└──────────────────────┘
            │
            ▼
┌──────────────────────┐
│        S203          │
└──────────────────────┘
            │
            ▼
┌──────────────────────┐
│        S204          │
└──────────────────────┘
            │
            ▼
┌──────────────────────┐
│        S205          │
└──────────────────────┘
            │
            ▼
┌──────────────────────┐
│        S206          │
└──────────────────────┘
            │
            ▼
┌──────────────────────┐
│        S207          │
└──────────────────────┘
            │
            ▼
┌──────────────────────┐
│        S208          │
└──────────────────────┘
            │
            ▼
┌──────────────────────┐
│        S209          │
└──────────────────────┘
            │
            ▼
┌──────────────────────┐
│        S210          │
└──────────────────────┘
            │
            ▼
┌──────────────────────┐
│        S211          │
└──────────────────────┘
```

Fig. 5

Fig. 6

```
┌──────────────────────────┐
│          S301            │
└──────────────────────────┘
             │
             ▼
┌──────────────────────────┐
│          S302            │
└──────────────────────────┘
             │
             ▼
┌──────────────────────────┐
│          S303            │
└──────────────────────────┘
             │
             ▼
┌──────────────────────────┐
│          S304            │
└──────────────────────────┘
             │
             ▼
┌──────────────────────────┐
│          S305            │
└──────────────────────────┘
             │
             ▼
┌──────────────────────────┐
│          S306            │
└──────────────────────────┘
             │
             ▼
┌──────────────────────────┐
│          S307            │
└──────────────────────────┘
             │
             ▼
┌──────────────────────────┐
│          S308            │
└──────────────────────────┘
```

Fig. 7

Fig. 8

```
┌─────────────────────────┐
│          S401           │
└─────────────────────────┘
             ▼
┌─────────────────────────┐
│          S402           │
└─────────────────────────┘
             ▼
┌─────────────────────────┐
│          S403           │
└─────────────────────────┘
             ▼
┌─────────────────────────┐
│          S404           │
└─────────────────────────┘
             ▼
┌─────────────────────────┐
│          S405           │
└─────────────────────────┘
             ▼
┌─────────────────────────┐
│          S406           │
└─────────────────────────┘
             ▼
┌─────────────────────────┐
│          S407           │
└─────────────────────────┘
             ▼
┌─────────────────────────┐
│          S408           │
└─────────────────────────┘
             ▼
┌─────────────────────────┐
│          S409           │
└─────────────────────────┘
             ▼
┌─────────────────────────┐
│          S410           │
└─────────────────────────┘
```

| **INTERNATIONAL SEARCH REPORT** | International application No. |
|---|---|
| | PCT/JP2009/054138 |

A.  CLASSIFICATION OF SUBJECT MATTER
*F02D19/02*(2006.01)i, *F02D41/02*(2006.01)i, *F02D41/04*(2006.01)i, *F02D41/14* (2006.01)i

According to International Patent Classification (IPC) or to both national classification and IPC

B.  FIELDS SEARCHED

Minimum documentation searched (classification system followed by classification symbols)
F02D19/02, F02D41/02, F02D41/04, F02D41/14

Documentation searched other than minimum documentation to the extent that such documents are included in the fields searched

| Jitsuyo Shinan Koho | 1922-1996 | Jitsuyo Shinan Toroku Koho | 1996-2009 |
|---|---|---|---|
| Kokai Jitsuyo Shinan Koho | 1971-2009 | Toroku Jitsuyo Shinan Koho | 1994-2009 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 06-108903 A  (Japan Electronic Control Systems Co., Ltd.), 19 April, 1994 (19.04.94), Full text; Figs. 3, 4 (Family: none) | 1-5 |
| Y | JP 2005-337046 A  (JFE Engineering Corp.), 08 December, 2005 (08.12.05), Abstract; Claim 1; Par. No. [0021] (Family: none) | 1-5 |
| Y | JP 08-232664 A  (Mitsubishi Heavy Industries, Ltd.), 10 September, 1996 (10.09.96), Claim 1 (Family: none) | 1-5 |

| ☒  Further documents are listed in the continuation of Box C. | ☐  See patent family annex. |
|---|---|

\*    Special categories of cited documents:
"A"   document defining the general state of the art which is not considered   to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| 17 April, 2009 (17.04.09) | 28 April, 2009 (28.04.09) |

| Name and mailing address of the ISA/ Japanese Patent Office | Authorized officer |
|---|---|
| Facsimile No. | Telephone No. |

Form PCT/ISA/210 (second sheet) (April 2007)

**INTERNATIONAL SEARCH REPORT**

International application No.

PCT/JP2009/054138

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-371893 A  (Toyota Motor Corp.),<br>26 December, 2002 (26.12.02),<br>Abstract; Claims 1, 4; Par. Nos. [0033] to [0036]<br>(Family: none) | 1-5 |
| Y | JP 2005-139984 A  (Toyota Motor Corp.),<br>02 June, 2005 (02.06.05),<br>Abstract; Par. Nos. [0009] to [0011]<br>& EP 1529941 A2 | 1-5 |
| A | JP 2004-270471 A  (Toyota Motor Corp.),<br>30 September, 2004 (30.09.04),<br>Claims 3, 5; Par. No. [0018]<br>(Family: none) | 1-5 |
| A | JP 2006-316718 A  (Isuzu Motors Ltd.),<br>24 November, 2006 (24.11.06),<br>Full text; Fig. 8<br>(Family: none) | 1-5 |
| P,X | JP 2008-215213 A  (Toyota Motor Corp.),<br>18 September, 2008 (18.09.08),<br>Par. Nos. [0042] to [0088]; Figs. 5 to 8<br>& WO 2008/108212 A1 | 1-5 |

Form PCT/ISA/210 (continuation of second sheet) (April 2007)

**EP 2 273 089 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008038729 A